# EUROPEAN PATENT APPLICATION

(11) **EP 4 768 442 A1**
(43) Date of publication of application: **01.07.2026**
(21) Application number: 25221497.8
(22) Date of filing: 08.12.2025
(51) Int. Cl.: C01G 53/05, C01G 53/42, H01M 4/525, C01G 53/84

(54) **POSITIVE ELECTRODE ACTIVE MATERIALS, PREPARATION METHODS THEREOF, POSITIVE ELECTRODES, AND RECHARGEABLE LITHIUM BATTERIES**

(30) Priority: 10.12.2024 KR 20240182808; 03.12.2025 KR 20250189759
(71) Applicant: SAMSUNG SDI CO., LTD., Yongin-si, Gyeonggi-do 17084 (KR)
(72) Inventor: KANG, Taegeun, 17084 Yongin-si (KR); CHANG, Donggyu, 17084 Yongin-si (KR); JANG, Jungsue, 17084 Yongin-si (KR); KIM, Jinhwa, 17084 Yongin-si (KR); KANG, Byungwuk, 17084 Yongin-si (KR); LEE, Chaewon, 17084 Yongin-si (KR)
(74) Representative: Maiwald GmbH

(57) **Abstract**

A positive electrode active material, a method of preparing the positive electrode active material, and a positive electrode and rechargeable lithium battery each including the positive electrode active material are provided. The positive electrode active material includes a lithium nickel-based composite oxide having a nickel content (e.g., amount) of greater than or equal to about 60 mol% based on 100 mol% of a total metal excluding lithium in the lithium nickel-based composite oxide, the lithium nickel-based composite oxide further including zirconium, and the positive electrode active material has a span ((D₉₀-D₁₀)/D₅₀) value of about 1.10 to about 1.25 in the particle size distribution and is in the form of single particles.

## Description

### BACKGROUND

### 1. Field

One or more embodiments of the present disclosure relate to positive electrode active materials, preparation methods thereof, and positive electrodes and rechargeable lithium batteries including the same.

### 2. Description of the Related Art

With the rapid proliferation of electronic devices that use batteries, such as mobile phones, notebook computers, and/or electric vehicles, demand for rechargeable batteries with high energy density and high capacity has been rapidly increasing. Accordingly, research and development efforts to improve the performance of rechargeable lithium batteries have intensified.

A rechargeable lithium battery includes a positive electrode and a negative electrode, each including an active material capable of intercalating and deintercalating lithium ions, and an electrolyte solution. Electrical energy is produced through oxidation and reduction reactions as lithium ions are intercalated/deintercalated into/from the positive electrode and the negative electrode. For example, the electrical energy is generated when lithium ions are intercalated into the positive electrode and/or deintercalated from the negative electrode during the discharge process.

Various positive electrode active materials have been explored to realize rechargeable lithium batteries for applications to difference electronic devices/equipment. Among them, lithium nickel-based oxide, lithium nickel manganese cobalt composite oxide, lithium nickel cobalt aluminum composite oxide, and lithium cobalt oxide are mainly used as positive electrode active materials. Recently, high nickel-based (high-nickel) positive electrode active materials having a nickel content (e.g., amount) of about 80 mol% or more have attracted attention for their ability to achieve high energy density. However, these materials face challenges, such as structural degradation during repeated cycling, surface reactions with electrolytes, particle cracking, and/or the like. Accordingly, development of positive electrode active materials capable of realizing high energy density and long cycle-life characteristics is desired or required.

As high nickel-based positive electrode active materials that realize high capacity, secondary particles made by agglomerating a plurality of primary particles have been mainly exploited and used, but recently, in order to realize the long cycle-life and reduce gas generation, single particles have been investigated and reviewed. However, because the synthesis of single particles often requires high firing temperatures, leading to particle agglomeration and reduced manufacturability. In order to prevent or reduce the agglomeration of the particles and lower the firing temperature, alkaline grain growth accelerators have been proposed to lower firing temperatures, but residual accelerators may increase electrode resistance and degrade cycle life, necessitating additional washing that increase cost and complexity.

Elemental doping (e.g., aluminum) has been suggested as a substitute for alkaline accelerators during precursor mixing. However, achieving uniform doping remains a significant challenge.

### SUMMARY

One or more aspects of embodiments of the present disclosure are directed toward a method for preparing a positive electrode active material, which is capable of substantially uniform particle growth during preparation. For example, the method enables substantially uniform particle growth during preparation.

One or more aspects of embodiments of the present disclosure are directed toward a rechargeable lithium battery that has excellent or suitable charge/discharge efficiency and cycle-life characteristics.

Additional aspects will be set forth in part in the description which follows and, in part, will be apparent from the description, or may be learned by practice of the presented embodiments.

According to one or more embodiments of the present disclosure, a positive electrode active material includes a lithium nickel-based composite oxide having a nickel content (e.g., amount) of greater than or equal to about (e.g., at least) 60 mol% based on 100 mol% of a total metal excluding the lithium in the lithium nickel-based composite oxide, and the lithium nickel-based composite oxide further including zirconium, wherein the positive electrode active material has a span ((D₉₀-D₁₀)/D₅₀) value of about 1.10 to about 1.25 in the particle size distribution and is in the form of single particles.

According to one or more embodiments of the present disclosure, a method for preparing a positive electrode active material includes: mixing a zirconium raw material and a nickel raw material and performing a co-precipitation reaction to prepare a nickel-based composite hydroxide containing zirconium; subjecting the nickel-based composite hydroxide containing zirconium to a first heat treatment to prepare a nickel-based composite oxide containing zirconium; mixing the nickel-based composite oxide containing zirconium and a lithium raw material and performing a second heat treatment to prepare a lithium nickel-based composite oxide containing zirconium in a form of secondary particles in which a plurality of primary particles are agglomerated; and pulverizing the lithium nickel-based composite oxide in the form of secondary particles to obtain a positive electrode active material in a form of single particles.

According to one or more embodiments of the present disclosure, there is provided a rechargeable lithium battery including a positive electrode including the positive electrode active material, a negative electrode, and an electrolyte.

According to one or more embodiments, the positive electrode active material enables substantially uniform particle growth during preparation, and thus a rechargeable lithium battery including the positive electrode active material has the advantage of excellent or suitable charge/discharge efficiency and cycle-life characteristics.

For example, a positive electrode active material, a positive electrode including the same, and a rechargeable lithium battery incorporating the positive electrode are provided. The positive electrode active material includes a lithium nickel-based composite oxide having a nickel content of at least about 60 mol% and including zirconium, exhibits a controlled particle size distribution with a span ((D₉₀-D₁₀)/D₅₀) of about 1.10 to about 1.25, and is in the form of single particles. The described preparation method enables substantially uniform particle growth and improved structural stability, thereby reducing particle agglomeration and enhancing electrochemical performance. As a result, a rechargeable lithium battery including the positive electrode active material may achieve excellent charge/discharge efficiency and improved cycle-life characteristics.

### BRIEF DESCRIPTION OF DRAWINGS

The accompanying drawings are included to provide a further understanding of the present disclosure and are incorporated in and constitute a part of the present disclosure. The drawings illustrate embodiments of the present disclosure and, together with the description, serve to explain principles of the present disclosure. The above and other aspects, features, and advantages of certain embodiments of the present disclosure will be more apparent from the following description taken in conjunction with the accompanying drawings.
FIGS. 1 - 4 are each a cross-sectional view schematically showing a rechargeable lithium battery according to one or more embodiments of the present disclosure.
FIG. 5 is a scanning electron microscope (SEM) image of the positive electrode active material prepared in Example 1 of the present disclosure.
FIG. 6 is an SEM image of the positive electrode active material prepared in Comparative Example 1 of the present disclosure.
FIG. 7 is an SEM image of the positive electrode active material prepared in Comparative Example 2 of the present disclosure.

### DETAILED DESCRIPTION

Hereinafter, one or more example embodiments of the present disclosure will be described in more detail so that those of ordinary skill in the art may easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise. For example, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

As used herein, "combination thereof" refers to a mixture, a laminate, a composite, a copolymer, an alloy, a blend, a reaction product, and/or the like of the constituents.

Herein, it should be understood that terms such as "comprise(s)/comprising," "include(s)/including," or "has(have)/having" are intended to designate the presence of an embodied feature, number, step (e.g., act or task), element, or a combination thereof, but it does not preclude the possibility of the presence or addition of one or more other features, numbers, steps (e.g., acts or tasks), elements, or a combination thereof. Additionally, the terms "comprise(s)/comprising," "include(s)/including," "has/have/having", or other similar terms include or support the terms "consisting of" and "consisting essentially of," indicating the presence of stated features, numbers, steps, operations, elements, and/or components, without or essentially without the presence of other features, numbers, steps, operations, elements, components, and/or groups thereof.

In the drawings, the thickness of layers, films, panels, regions, and/or the like, may be exaggerated or reduced for clarity, and like reference numerals designate like elements throughout the disclosure, and duplicative descriptions thereof may not be provided for conciseness. It will be understood that if (e.g., when) an element such as a layer, film, region, or substrate is referred to as being "on" another element, it may be directly on the other element or one or more intervening elements may also be present therebetween. In contrast, if (e.g., when) an element is referred to as being "directly on" another element, there are no intervening elements present therebetween.

In addition, "layer" as used herein includes not only a shape formed on a whole surface if (e.g., when) viewed from a plan view, but also a shape formed on a partial surface (e.g., a portion of whole surface).

In one or more embodiments, the average particle diameter may be measured by a method well suitable to those skilled in the art, for example, by a particle size analyzer, for example, HORIBA, LA-950 laser particle size analyzer, or by a transmission electron microscope (TEM) or a scanning electron microscope (SEM). In one or more embodiments, it may obtain an average particle diameter value by measuring it using a dynamic light scattering method, performing data analysis, counting the number of particles for each particle size range, and calculating from the data. Unless otherwise defined, the average particle diameter may refer to a diameter (D₅₀) of particles having a cumulative volume of 50 volume% in a particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. D₉₀ refers to the average diameter (or size) of particles whose cumulative volume corresponds to 90 vol% in the particle size distribution (e.g., cumulative distribution), and refers to the value of the particle size corresponding to 90% from the smallest particle when the total number of particles is 100% in the distribution curve accumulated in the order of the smallest particle size to the largest particle size. D₁₀ refers to the average diameter (or size) of particles whose cumulative volume corresponds to 10 vol% in the particle size distribution (e.g., cumulative distribution), and refers to the value of the particle size corresponding to 10% from the smallest particle when the total number of particles is 100% in the distribution curve accumulated in the order of the smallest particle size to the largest particle size. In the present disclosure, when particles are spherical, "diameter" indicates a particle diameter or an average particle diameter, and when the particles are non-spherical, the "diameter" indicates a major axis length or an average major axis length.

Herein, "or" is not to be construed as an exclusive meaning, for example, "A or B" is construed to include A, B, A+B, and/or the like. Further, as used herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

As used herein, the term "metal" is interpreted as a concept including ordinary metals, transition metals and metalloids (semi-metals). And the term "Group" as used herein refers to a group of the Periodic Table of Elements according to the 1 to 18 grouping system of the International Union of Pure and Applied Chemistry ("IUPAC").

### Positive Electrode Active Material

According to one or more embodiments of the present disclosure, a positive electrode active material, a form of particles, may include a lithium nickel-based composite oxide having a nickel content (e.g., amount) of greater than or equal to (e.g., at least) about 60 mol% based on 100 mol% of a total metal excluding the lithium in the lithium nickel-based composite oxide, and the lithium nickel-based composite oxide further including zirconium, wherein the positive electrode active material has a span value (i.e., (D₉₀-D₁₀)/D₅₀) of about 1.10 to about 1.25 and is in a form of single particles.

By uniformly (e.g., substantially uniformly) distributing zirconium, which acts as a grain growth accelerator during the synthesis process, within a positive electrode active material precursor, it may prepare a positive electrode active material in the form of single particles with substantially uniform grain growth. By including such a positive electrode active material, there is an advantage in that a rechargeable lithium battery with excellent or suitable charge/discharge efficiency and life characteristics may be implemented.

Here, the single particles may each exist alone without a grain boundary within the particle, is each composed of one particle, and may each be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may each exist alone, or single particles may be attached together. For example, 2 to 9 single particles may be attached and in contact with each other.

In one or more embodiments, a single particle may exist alone, or five or less single particles may be attached to each other.

For example, the span value may be an indicator showing a width of a particle size distribution of a positive electrode active material and accordingly, used to evaluate uniformity of positive electrode active material particles.

For example, the span value may be measured by using a particle size analyzer for a positive electrode active material, preferably a laser diffraction particle size analyzer, and, for example, a device such as a laser diffraction particle size analyzer, a dynamic light scattering analyzer, and/or the like may be used to measure particle sizes corresponding to about 10%, about 50%, and about 90% cumulative volumes in the particle size distribution (e.g., cumulative distribution curve), which are used to calculate the span value.

For example, the span value may be calculated according to {(D₉₀-D₁₀)/D₅₀}. In the formula, D₁₀ is a particle size at which about 10% of the particles are smaller than this particle size in the cumulative distribution curve, D₅₀ is a particle size at which 50% of the particles are smaller than this particle size in the cumulative distribution curve, and D₉₀ is a particle size at which 90% of the particles are smaller than this particle size in the cumulative distribution curve.

For example, in one or more embodiments, the positive electrode active material may have a span value of about 1.10 to about 1.25, for example, about 1.13 to about 1.25, about 1.10 to about 1.24, about 1.13 to about 1.24, about 1.15 to about 1.23, about 1.18 to about 1.22, or about 1.19 to about 1.21.

For example, in one or more embodiments, the positive electrode active material may have a BET (Brunauer-Emmett-Teller) specific surface area of about 0.75 m²/g to about 1.2 m²/g, for example, about 0.8 m²/g to about 1.2 m²/g, or about 0.9 m²/g to about 1.1 m²/g.

If (e.g., when) the span value and the BET specific surface area of the positive electrode active material satisfy the respective ranges, the particle size distribution is substantially uniform, realizing a positive electrode active material with excellent or suitable particle uniformity and thereby, accomplishing very excellent or suitable charge/discharge characteristics and cycle-life characteristics of a rechargeable lithium battery including the same.

In one or more embodiments, the positive electrode active material may be in the form of single particles having an average particle diameter (D₅₀) of about 1 micrometer (µm) to about 4 µm, for example, about 1 µm to about 3 µm, about 2 µm to about 4 µm, or about 2 µm to about 3 µm.

In one or more embodiments, the positive electrode active material may be in the form of single particles having a particle diameter (D₁₀) of about 0.1 µm to about 3 µm, for example, about 0.5 µm to about 2.5 µm, or about 1 µm to about 2 µm.

In one or more embodiments, the positive electrode active material may be in the form of single particles having a particle diameter (D₉₀) of about 3 µm to about 6 µm, for example, about 4 µm to about 6 µm, or about 4 µm to about 5.5 µm.

In one or more embodiments, the positive electrode active material may be in the form of single particles having a particle diameter (D₂₅) of about 0.5 µm to about 4 µm, for example, about 1 µm to about 3 µm, or about 1.5 µm to about 2.5 µm.

In one or more embodiments, the positive electrode active material may be in the form of single particles having a particle diameter (D₇₅) of about 2.5 µm to about 5 µm, for example, about 3 µm to about 5 µm, or about 3 µm to about 4.5 µm.

In addition to the span value, if (e.g., when) the positive electrode active material in the form of single particles has particle diameters each within the respective range, the particle size distribution is more substantially uniform, thus realizing a positive electrode active material with excellent or suitable particle uniformity.

The single particles satisfying the above particle size range are structurally stable, may increase the energy density of the positive electrode, and may improve the long cycle-life characteristics of rechargeable lithium batteries. Here, the average particle diameter is obtained by measuring the size of 20 random particles (particle diameter, major diameter, or major axis length) in a scanning electron microscope image, for example, to obtain a particle size distribution, and calculating the size (D₅₀) of the particle with a cumulative volume of 50 volume% in the particle size distribution.

The lithium nickel-based composite oxide including the zirconium may be a high nickel-based oxide having a nickel content (e.g., amount) of greater than or equal to (e.g., at least) about 60 mol% based on 100 mol% of a total metal excluding lithium in the lithium nickel-based composite oxide. In one or more embodiments, the nickel content (e.g., amount) may be, for example, greater than or equal to about 65 mol%, greater than or equal to about 70 mol%, greater than or equal to about 75 mol%, greater than or equal to about 80 mol%, greater than or equal to about 85 mol%, greater than or equal to about 90 mol%, greater than or equal to about 91 mol%, or greater than or equal to about 94 mol% and less than or equal to (e.g., at most) about 99 mol% or less than or equal to about 98 mol% based on 100 mol% of a total metal excluding lithium in the lithium nickel-based composite oxide. When the nickel content (e.g., amount) in a lithium nickel-based composite oxide satisfies the above range, high capacity and high energy density may be achieved.

In one or more embodiments, the lithium nickel-based composite oxide may include a specific amount of zirconium as a dopant in addition to nickel.

For example, the zirconium may be included in an amount of about 0.1 wt% to about 0.4 wt%, for example, about 0.1 wt% to about 0.3 wt%, about 0.1 wt% to about 0.2 wt%, about 0.15 wt% to about 0.2 wt%, or about 0.16 wt% to about 0.18 wt% based on a total weight of 100 wt% of the lithium nickel-based composite oxide.

If (e.g., when) the zirconium is included in an amount of less than about 0.1 wt% based on the total weight of 100 wt% of the lithium nickel-based composite oxide, the positive electrode active material particles may not be substantially uniform, and if (e.g., when) it is included in an amount exceeding about 0.4 wt%, excessive addition of zirconium may cause agglomeration within the positive electrode active material.

For example, in one or more embodiments, the lithium nickel-based composite oxide containing the zirconium may be represented by Chemical Formula 1.

**Chemical Formula 1** **Liₐ₁Niₓ₁M¹_{y1}Zr_{z1}O_{2-b1}X_{b1}**

In Chemical Formula 1, 0.9≤a1≤1.2,
0.6≤x1≤0.991, 0≤y1≤0.5, 0.001≤z1≤0.003, 0.9≤x1+y1≤1.1, and 0≤b1≤0.1, M¹ may be one or more elements selected from among aluminum (Al), boron (B), barium (Ba), calcium (Ca), cerium (Ce), cobalt (Co), chromium (Cr), copper (Cu), iron (Fe), magnesium (Mg), manganese (Mn), molybdenum (Mo), niobium (Nb), silicon (Si), tin (Sn), strontium (Sr), titanium (Ti), vanadium (V), tungsten (W,) and zinc (Zn), and X may be one or more elements selected from among fluorine (F), phosphorous (P), and sulfur (S).

In Chemical Formula 1, 0.9≤a1≤1.1, 0.9≤a1≤1.05, or 0.9≤a1≤1; 0.7≤x1≤0.991, and 0≤y1≤0.291; 0.8≤x1≤0.991, and 0≤y1≤0.191; or 0.9≤x1≤0.991, and 0≤y1≤0.091. z1 representing the Zr content (e.g., amount) may be, for example, 0.001≤z1≤0.002.

In one or more embodiments, the concentration of zirconium within the single particle may be uniform (e.g., substantially uniform). For example, the single particle may not have a zirconium concentration gradient from the center to the surface, or the zirconium concentration may not be higher or lower in a portion closer to the surface than in the center of the single particle, and zirconium may be evenly distributed within the single particle. This refers to a structure obtained by synthesizing a positive electrode active material in a form of single particles using a precursor containing zirconium without additionally doping zirconium during the synthesis process of single particles. For example, this feature may be obtained by using a nickel-based oxide containing zirconium as a precursor according to one or more embodiments, mixing the precursor with a lithium raw material, and performing a heat treatment to synthesize a lithium nickel-zirconium-based composite oxide. For example, it may refer to that a zirconium content (e.g., amount) within the single particle is the same or similar regardless of location. For example, if (e.g., when) the zirconium content (e.g., amount) is measured at an arbitrary location in the cross-section of the single particle, the zirconium content (e.g., amount) can be expressed as being the same, similar, or uniform (e.g., substantially uniform) regardless of whether the location is close to the center of the single particle or close to the surface of the single particle.

In the case of doping zirconium in the synthesis process of single particles, for example, in the case of preparing a lithium nickel-based composite oxide doped with zirconium through a process of mixing a nickel-containing precursor, a zirconium raw material, and a lithium raw material and firing them, a phenomenon occurs in which zirconium is not uniformly distributed but rather coagulates inside the single particles. In contrast, in the positive electrode active material according to one or more embodiments, zirconium is uniformly (e.g., substantially uniformly) distributed within each single particle and no coagulation phenomenon occurs, and accordingly, the initial charge/discharge capacity, initial charge/discharge efficiency, and cycle-life characteristics of the positive electrode active material may be improved. The even distribution of zirconium within a single particle may be determined by analyzing the distribution of the zirconium element, for example, using scanning electron microscopy-energy dispersive spectroscopy (SEM-EDS) on a cross-section of the single particle. For example, the positive electrode active material according to one or more embodiments may have zirconium uniformly (e.g., substantially uniformly) distributed in the SEM-EDS analysis of the cross-section of a single particle.

### Method for Preparing Positive Electrode Active Material

According to one or more embodiments of the present disclosure, a method for preparing a positive electrode active material includes: (1) mixing a zirconium raw material and a nickel raw material and performing a co-precipitation reaction to prepare a nickel-based composite hydroxide containing zirconium; (2) subjecting the nickel-based composite hydroxide containing zirconium to a first heat treatment to prepare a nickel-based composite oxide containing zirconium; (3) mixing the nickel-based composite oxide containing zirconium and a lithium raw material and performing a second heat treatment to prepare a lithium nickel-based composite oxide containing zirconium in a form of secondary particles in which a plurality of primary particles are agglomerated; and (4) pulverizing the lithium nickel-based composite oxide in the form of secondary particles to obtain a positive electrode active material in a form of single particles.

Comparably, used is a method of adding the zirconium raw material when the nickel-based composite hydroxide/or oxide produced after the co-precipitation reaction is mixed with the lithium raw material and then heat-treated together. That is, the zirconium raw material is added after the co-precipitation reaction, when the nickel-based composite hydroxide or oxide is mixed with the lithium raw material and then heat-treated together. This comparable method may be understood as a method of post-doping zirconium, wherein the zirconium is not evenly distributed, causing a problem of providing a single particle positive electrode active material with uneven particle growth.

The method according to one or more embodiments of the present disclosure is to add the zirconium raw material to the nickel raw material to perform the co-precipitation reaction, which may be understood as a zirconium predoping method. For example, in contrast to the comparable post-doping approach, the method according to embodiments of the present disclosure introduces zirconium during the co-precipitation stage, thereby achieving a more uniform distribution of zirconium within the nickel-based composite hydroxide precursor. This uniform incorporation facilitates controlled particle growth during subsequent heat treatments and contributes to the formation of single particles with a narrow particle size distribution. As a result, the positive electrode active material prepared by this method exhibits improved structural stability and electrochemical performance compared to materials produced by post-doping techniques.

Herein, the zirconium raw material may serve as a dopant and concurrently (e.g., simultaneously), as a particle growth accelerator (flux). When the zirconium raw material is added, particle growth is promoted, making it possible to effectively synthesize single particles at a lower temperature compared to single particle synthesis methods in the art and as a result, agglomeration of particles is suppressed or reduced, and productivity is improved. The zirconium raw material is used as a dopant for the positive electrode active material and does not remain on the surface of the positive electrode active material particles, and thus the cycle-life characteristics may be improved.

In addition, one or more embodiments of the present disclosure, in which the positive electrode active material single particles are prepared by predoping zirconium, has an advantage of preparing the single crystals with relatively uniform particle growth due to even distribution of the zirconium. In addition, a rechargeable lithium battery including the positive electrode active material single particles with substantially uniform particle growth may have advantages of exhibiting an increase in charge/discharge capacity and efficiency and achieving excellent or suitable cycle-life characteristics.

Furthermore, the preparing method may be understood as a method of mixing a zirconium-containing nickel-based composite oxide in the form of an oxide (hereinafter, referred to as an 'oxide precursor') with the lithium raw material and firing the mixture. Comparably, a method of mixing the lithium raw material with a nickel-based composite hydroxide in the form of a hydroxide (hereinafter, referred to as a 'hydroxide precursor') and firing the mixture is used. The oxide precursor has a smaller volume than the hydroxide precursor and thus may be more contained in a reactor (a crucible, and/or the like) than the hydroxide precursor in a process of preparing the positive electrode active material, thereby resulting in a higher reaction yield, which may be significantly advantageous in terms of production volume and economic efficiency. In addition, the oxide precursor has a similar reaction temperature range to that of the lithium raw material, and thus an advantage of achieving more uniform particle growth of a positive electrode active material than the hydroxide precursor.

Hereinafter, a method for preparing a positive electrode active material will be further described in more detail.

A method for preparing a positive electrode active material according to one or more embodiments includes mixing a zirconium raw material and a nickel raw material and performing a co-precipitation reaction to prepare a nickel-based composite hydroxide containing zirconium.

For example, the zirconium raw material may include zirconium oxide, zirconium hydroxide, zirconium oxyhydroxide, zirconium sulfate, zirconium sulfide, zirconium acetate, zirconium nitrate, zirconium halide, or a combination thereof. In one or more embodiments, the zirconium raw material may include ZrO₂, ZrO(NO₃)₂·xH₂O (2≤x≤6), Zr(SO₄)₂·4H₂O, or a combination thereof.

The nickel raw material may include nickel hydroxide, nickel oxide, nickel nitrate, nickel sulfur oxide (e.g., nickel sulfate), nickel carbonate, or a combination thereof.

In one or more embodiments, in the co-precipitation reaction, a metal (M¹) raw material may be mixed together with the zirconium raw material and the nickel raw material.

For example, M¹ may be one or more elements selected from among Al, B, Ba, Ca, Ce, Co, Cr, Cu, Fe, Mg, Mn, Mo, Nb, Si, Sn, Sr, Ti, V, W, and Zn.

For example, the metal (M¹) raw material may include a hydroxide, an oxide, a nitrate, a sulfate, a carbonate, or a combination thereof, containing the M¹ element.

A complexing agent and a pH controlling agent may be used in the co-precipitation reaction. The complexing agent plays a role in controlling a reaction rate of precipitate formation in the co-precipitation reaction, and may include, for example, ammonium hydroxide (NH₄OH), citric acid, or a combination thereof. A concentration of complexing agent may be about 0.1 M to about 1.5 M, for example, about 0.1 M to about 1.4 *M*, or about 0.5 M to about 1.4 M. The pH controlling agent serves to control the pH of the reactant solution and may include, for example, sodium hydroxide (NaOH), sodium carbonate (Na₂CO₃), sodium oxalate (Na₂C₂O₄), or a combination thereof.

The co-precipitation reaction may include a first step (e.g., act or task) reacting at a pH range of about 11 to about 12 and a second step (e.g., act or task) reacting at a pH lower than that of the first step (e.g., act or task). The pH of the first step (e.g., act or task) may be, for example, about 11.5 to about 12, about 11.6 to about 11.9, or about 11.7 to about 11.8, and may be considered a kind of pore shaping step (e.g., act or task). The second step (e.g., act or task) is a step (e.g., act or task) of reaction at a pH lower than that of the first step (e.g., act or task) and may be a type (kind) of particle growth step (e.g., act or task). The pH of the second step (e.g., act or task) may be, for example, about 10 to about 11.9, about 10.5 to about 11.7, about 11 to about 11.7, about 11.2 to about 11.6, or about 11.3 to about 11.6. A difference between the pH of the first step (e.g., act or task) and the pH of the second step (e.g., act or task) may be, for example, about 0.1 to about 1.5, for example, about 0.1 to about 1.0, about 0.1 to about 0.8, about 0.1 to about 0.6, about 0.1 to about 0.5, about 0.1 to about 0.3, or about 0.1 to about 0.2.

The first step (e.g., act or task) may proceed for about 6 hours to about 12 hours, or about 8 hours to about 10 hours. The second step (e.g., act or task) may proceed for about 10 hours to about 30 hours, about 15 hours to about 25 hours, or about 18 hours to about 24 hours.

Next, the preparing method according to one or more embodiments includes subjecting the nickel-based composite hydroxide containing zirconium to a first heat treatment to prepare a nickel-based composite oxide containing zirconium.

The nickel-based composite oxide containing zirconium may be a precursor of a positive electrode active material, and may be referred to as a Zr predoped oxide precursor. The nickel-based composite oxide containing zirconium may be synthesized by first heat-treating the nickel-based composite hydroxide containing zirconium prepared by the co-precipitation reaction.

For example, the first heat treatment may be performed at a temperature of less than or equal to (e.g., at most) about 500 °C, for example, about 250°C to about 500°C, about 300°C to about 500°C, about 350°C to about 500°C, or about 400°C to about 500°C, for example, about 400°C, about 450°C, or about 500°C.

For example, the first heat treatment may be performed in an oxygen atmosphere or an air atmosphere for about 1 hour to about 10 hours, for example, about 2 hours to about 9 hours, or about 4 hours to about 8 hours.

The nickel-based composite oxide containing zirconium prepared above may be represented by, for example, Chemical Formula 11.

**Chemical Formula 11** **Niₓ₁₁M¹_{y11}Zr_{z11}O₂**

In Chemical Formula 11, 0.6≤x11≤1, 0≤y11<0.4, 0<z11≤0.003, and 0.9≤x11+y11+z11≤1.1, and M¹ may be one or more elements selected from among Al, B, Ba, Ca, Ce, Co, Cr, Cu, Fe, Mg, Mn, Mo, Nb, Si, Sn, Sr, Ti, V, W, and Zn.

In one or more embodiments, in Chemical Formula 11, 0.7≤x11≤1, 0≤y11≤0.3, 0.001≤z11≤0.003, or 0.8≤x11≤1, 0≤y11≤0.2, 0.001≤z11≤0.0025, or 0.9≤x11<1, 0<y11≤0.1, 0.001≤z11≤0.002.

For example, based on a total weight of 100 wt% of the nickel-based composite oxide containing zirconium, the zirconium may be included in an amount of about 0.1 wt% to about 0.5 wt%, for example, about 0.1 wt% to about 0.4 wt%, about 0.1 wt% to about 0.3 wt%, about 0.2 wt% to about 0.3 wt%, or about 0.2 wt% to about 0.25 wt%.

If (e.g., when) the zirconium is included in an amount of less than about 0.1 wt% based on the total weight of 100 wt% of the nickel-based composite oxide containing the zirconium, it may be difficult to sufficiently promote grain growth of the positive electrode active material single particles, and if (e.g., when) it is included in an amount exceeding about 0.5 wt%, excessive addition of zirconium may cause agglomeration within the positive electrode active material.

For example, in one or more embodiments, a span value of the nickel-based composite oxide containing zirconium may be about 0.2 to about 0.6, for example, from about 0.3 to about 0.6. If (e.g., when) the span value of the nickel-based composite oxide containing the zirconium as a precursor satisfies the above numerical range, the particle size distribution is substantially uniform, and thus the particle uniformity of the positive electrode active material prepared using it is also improved.

For example, in one or more embodiments, a tap density (TD) of the nickel-based composite oxide containing zirconium may be about 2 g/cm³ to about 3 g/cm³, for example, about 2 g/cm³ to about 2.5 g/cm³, or about 2.05 g/cm³ to about 2.2 g/cm³. If (e.g., when) the above numerical range is satisfied, the reaction yield is high, and substantially uniform particle growth of the active material may be realized.

For example, in one or more embodiments, a BET surface area value of the nickel-based composite oxide containing zirconium may be about 50 m²/g to about 90 m²/g, for example, about 60 m²/g to about 80 m²/g, or about 70 m²/g to about 80 m²/g. If (e.g., when) the above numerical range is satisfied, the specific surface area of the precursor is high, and thus the reaction yield may be increased and substantially uniform particle growth of the active material may be realized.

The preparing method according to one or more embodiments includes mixing the nickel-based composite oxide containing zirconium and a lithium raw material and performing a second heat treatment to prepare a lithium nickel-based composite oxide containing zirconium in a form of secondary particles in which a plurality of primary particles are agglomerated.

For example, the lithium raw material may include lithium hydroxide, lithium carbonate, lithium sulfate, lithium nitrate, or a combination thereof, and, in one or more embodiments, the lithium raw material may be, for example, anhydrous lithium hydroxide.

The method according to one or more embodiments may promote substantially uniform particle growth of an active material by predoping the zirconium-containing nickel-based composite oxide with zirconium and thus have an advantage of effectively synthesizing single particles despite a heat treatment at a lower temperature than that of the comparable single particle synthesis method. To put it another way, the method according to one or more embodiments promotes substantially uniform particle growth by introducing zirconium during the co-precipitation stage, enabling effective synthesis of single-particle positive electrode active materials even at a lower heat-treatment temperature compared to comparable methods. This approach improves process efficiency while maintaining desirable structural and electrochemical properties.

For example, the second heat treatment may be performed at less than or equal to about 900 °C, less than or equal to about 890 °C, less than or equal to about 850 °C, or less than or equal to about 810 °C, for example, about 600 °C to about 900 °C, about 600 °C to about 850 °C, or about 600 °C to about 800 °C.

For example, the second heat treatment may be performed under an oxidizing gas atmosphere, for example, for about 4 hours to about 16 hours, about 5 hours to about 16 hours, or about 6 hours to about 16 hours.

In the method for preparing a positive electrode active material according to one or more embodiments, an alkaline particle growth accelerator or a flux may not be added during the second heat treatment of the zirconium-containing nickel-based composite oxide and the lithium raw material. Accordingly, the increase in resistance by a residue after the second heat treatment may be prevented or reduced, resultantly improving cycle-life characteristics of a rechargeable lithium battery, and because there is no need to add a process of removing the residue, the productivity and processability may be improved.

In addition, as described above, in the method for preparing a positive electrode active material according to one or more embodiments, the zirconium raw material may be added in advance during the synthesis of the zirconium-containing nickel-based composite oxide before the second heat treatment of the zirconium-containing nickel-based composite oxide with the lithium raw material. Accordingly, the zirconium may be uniformly (e.g., substantially uniformly) doped in the zirconium-containing nickel-based composite oxide and thus promote particle growth of positive electrode active material single particles, thereby providing uniformly (e.g., substantially uniformly) grown positive electrode active material particles.

Through the second heat treatment, secondary particles including the zirconium-containing lithium nickel-based composite oxide may be obtained. For example, the zirconium-containing lithium nickel-based composite oxide obtained after the second heat treatment may include the secondary particles in which a plurality of primary particles are agglomerated. Herein, the primary particles forming the secondary particles may sufficiently grow due to the addition of the zirconium raw material and become single particles.

An average particle diameter (D₅₀) of the obtained secondary particles may be about 10 µm to about 20 µm, for example, about 10 µm to about 18 µm, about 12 µm to about 16 µm, or about 12 µm to about 14 µm. The average particle diameter (D₅₀) of secondary particles may be measured through SEM images.

An average particle diameter (D₅₀) of the primary particles constituting the secondary particles may be about 1 µm to about 4 µm, for example, about 1 µm to about 3 µm, about 2 µm to about 4 µm, or about 2 µm to about 3 µm. The average particle diameter (D₅₀) of the primary particles may be measured through SEM images of the surfaces of the secondary particles.

The preparing method according to one or more embodiments includes pulverizing the lithium nickel-based composite oxide in the form of secondary particles to obtain a positive electrode active material in a form of single particles.

The pulverization of the secondary particles refers to breaking the prepared secondary particles and may be understood as a process of separating the primary particles making up the secondary particles from each other into single particles. Through the pulverization, the aforementioned positive electrode active material in the form of single particles with an average particle diameter (D₅₀) of about 1 µm to about 4 µm may be obtained.

In one or more embodiments, the pulverization may be carried out using a jet mill equipment. When the pulverization with a jet mill equipment (e.g., a jet mill) is performed, a bed weight may be about 250 kg to about 300 kg, a rotation speed of a sieving wheel of the jet mill equipment may be about 1500 rpm to about 2000 rpm, a rotation speed of a blower of the jet mill equipment may be about 2500 rpm to about 3500 rpm, a pulse pressure may be about 0.25 bar to about 0.75 bar, a gap pressure may be about 0.3 bar to about 0.5 bar, and G/A (gas to air ratio) may be about 6 to 8.

The pulverizing time may vary depending on a rotation speed of the sieving wheel of the jet mill equipment, the rotation speed of the blower of the jet mill equipment, the pressure, and the bed weight, and for example, about 4 kg to about 6 kg of sample may be processed per minute based on the jet mill equipment.

For example, the positive electrode active material in the form of single particles may include a compound represented by Chemical Formula 1, and the descriptions of Chemical Formula 1 is the same as described above.

The zirconium may be included in an amount of about 0.1 wt% to about 0.4 wt%, for example, about 0.1 wt% to about 0.3 wt%, about 0.1 wt% to about 0.2 wt%, about 0.15 wt% to about 0.2 wt%, or about 0.16 wt% to about 0.18 wt% based on a total weight of 100 wt% of the positive electrode active material in the form of single particles. For example, the zirconium content (e.g., amount) included in the positive electrode active material may be measured using an SEM (Scanning Electron Microscope, SEM)-EDS (Energy-Dispersive X-ray Spectroscopy, EDS) analysis technique.

The method for preparing a positive electrode active material according to one or more embodiments may further include mixing the obtained positive electrode active material in the form of single particles with a coating raw material and performing a third heat treatment. Through this step (e.g., act or task), it may obtain single particles coated with a desired or suitable material.

The coating raw material is not particularly limited, and may be, for example, a raw material of one or more elements selected from among Al, B, Co, Mg, V, Zn, and Zr, and may be a hydroxide, an oxide, a sulfur oxide, a nitrous oxide, or a carbonate, each containing one or more of the above elements.

The third heat treatment may be performed in an oxidizing gas atmosphere, and may be performed at, for example, about 500 °C to about 900 °C, or about 600 °C to about 900 °C, or about 600 °C to about 800 °C.

The third heat treatment may be performed for about 5 hours to about 20 hours, for example, for about 7 hours to about 20 hours, or for about 10 hours to about 20 hours.

The positive electrode active material obtained through the above preparing method includes a lithium nickel-based composite oxide and may include single particles with an average particle diameter (D₅₀) of about 1 µm to about 4 µm, and may include, for example, a mixture of non-pulverized secondary particles and pulverized single particles.

### Positive Electrode

According to one or more embodiments of the present disclosure, a positive electrode for a rechargeable lithium battery may include the afore-described positive electrode active material. For example, in one or more embodiments, the positive electrode may include a positive electrode current collector and a positive electrode active material layer on the positive electrode current collector, and the positive electrode active material layer may include the afore-described positive electrode active material and may further include a binder and/or a conductive material (e.g., electron conductor).

In one or more embodiments, the positive electrode may further include an additive that may act as a sacrificial positive electrode.

Herein, the positive electrode active material includes a lithium nickel-based composite oxide having a nickel content (e.g., amount) of greater than or equal to about 60 mol% based on 100 mol% of a total metal excluding the lithium in the lithium nickel-based composite oxide, and the lithium nickel-based composite oxide further including zirconium, wherein the positive electrode active material has a span ((D₉₀-D₁₀)/D₅₀) value of about 1.10 to about 1.25 in a particle size distribution and is in a form of single particles.

An amount of the positive electrode active material may be about 90 wt% to about 99.5 wt% based on a total weight of 100 wt% of the positive electrode active material layer, and amounts of the binder and the conductive material may be about 0.5 wt% to about 5 wt%, respectively, based on the total weight of 100 wt% of the positive electrode active material layer.

The binder serves to well attach the positive electrode active material particles to each other and also to well attach the positive electrode active material to the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, but embodiments of the present disclosure are not limited thereto.

The conductive material (e.g., electron conductor) may be used to impart conductivity (electrical conductivity) to the electrode, and any material that does not cause an undesirable chemical change and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and/or carbon nanotube; a metal-based material containing copper, nickel, aluminum, silver, and/or the like, in a form of a metal powder or a metal fiber; a conductive polymer such as a polyphenylene derivative; or a mixture thereof.

In one or more embodiments, the positive electrode current collector may include Al, but embodiments of the present disclosure are not limited thereto.

### Rechargeable Lithium Battery

According to one or more embodiments of the present disclosure, a rechargeable lithium battery may include the afore-described positive electrode, a negative electrode, and an electrolyte. For example, in one or more embodiments, a rechargeable lithium battery may include the positive electrode, a negative electrode, a separator between the positive electrode and the negative electrode, and an electrolyte solution.

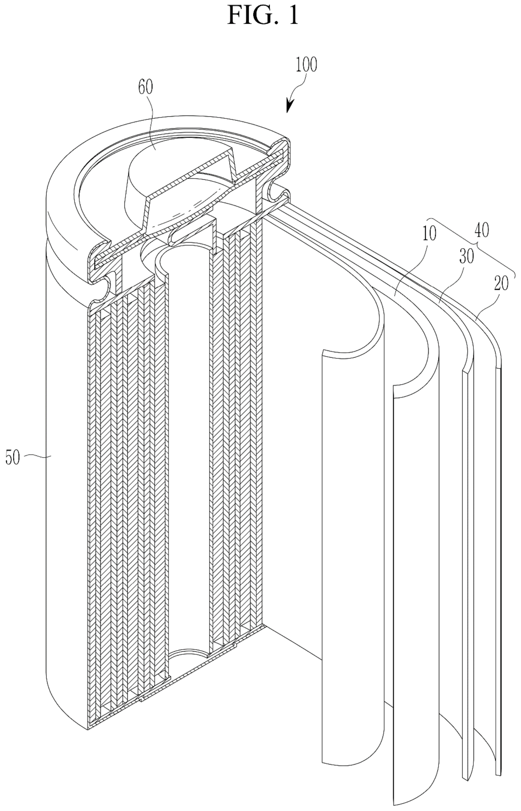

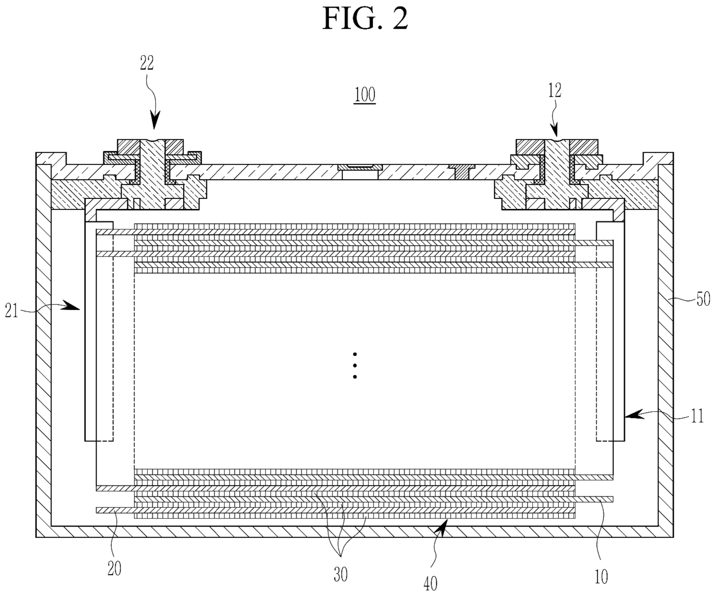

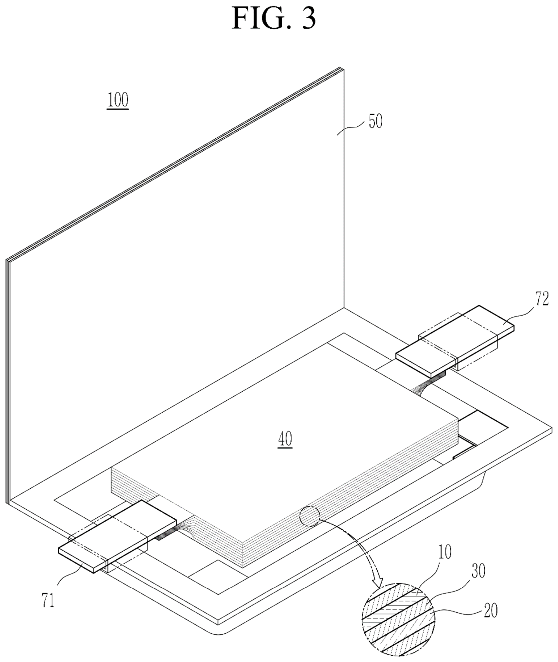

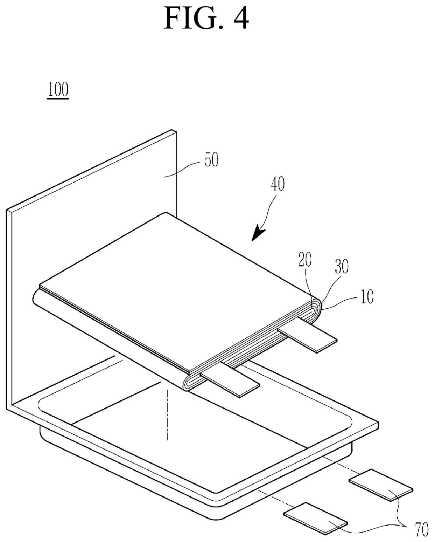

The rechargeable lithium battery may be classified into cylindrical, prismatic, pouch, coin, and/or the like depending on its shape. FIGS. 1 to 4 are each a schematic diagram showing the rechargeable lithium battery according to one or more embodiments, where FIG. 1 shows a cylindrical battery, FIG. 2 shows a prismatic battery, and FIGS. 3 and 4 each show a pouch-shaped battery. Referring to FIGS. 1 to 4, the rechargeable lithium battery 100 may include an electrode assembly 40 with a separator 30 interposed between a positive electrode 10 and a negative electrode 20, and a case 50 in which the electrode assembly 40 is housed. The positive electrode 10, the negative electrode 20, and the separator 30 may be impregnated with an electrolyte solution. In one or more embodiments, the rechargeable lithium battery 100 may include a sealing member 60 that seals the case 50 as shown in FIG. 1. In one or more embodiments, as shown in FIG. 2, the rechargeable lithium battery 100 may include a positive electrode lead tab 11, a positive electrode terminal 12, a negative electrode lead tab 21, and a negative electrode terminal 22. In one or more embodiments, as shown in FIGS. 3 and 4, the rechargeable lithium battery 100 includes an electrode tab 70, that is, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or one or more suitable types (kinds) of electrical devices, but embodiments of the present disclosure are not limited thereto.

### Negative Electrode

The negative electrode may include a negative electrode current collector and a negative electrode active material layer on the negative electrode current collector, and the negative electrode active material layer may include a negative electrode active material (e.g., in a form of particles), and may further include a binder, a conductive material (e.g., electron conductor), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example crystalline carbon, amorphous carbon, or a combination thereof. The crystalline carbon may be graphite such as non-shaped, sheet-shaped, flake-shaped, sphere-shaped, or fiber-shaped natural graphite and/or artificial graphite, and the amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy (wherein Q is an element selected from among an alkali metal, an alkaline-earth metal, a Group 13 element, a Group 14 element (excluding Si), a Group 15 element, a Group 16 element, a transition metal, a rare earth element, and a combination thereof, for example, magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), thallium (TI), germanium (Ge), phosphorus (P), arsenic (As), antimony (Sb), bismuth (Bi), sulfur (S), selenium (Se), tellurium (Te), polonium (Po, and a combination thereof), or a combination thereof. The Sn-based negative electrode active material may be Sn, SnOₓ (0 < x ≤ 2) (e.g., SnO₂), a Sn alloy, or a combination thereof.

The silicon-carbon composite, in a form of particles, may be a composite of silicon and amorphous carbon. An average particle diameter (D₅₀) of the silicon-carbon composite particles may be, for example, about 0.5 µm to about 20 µm. According to one or more embodiments, the silicon-carbon composite may be in the form of silicon particles and amorphous carbon coated on the surface of each of the silicon particles. For example, in one or more embodiments, it may include a secondary particle (core) in which silicon primary particles are assembled (e.g., agglomerated) and an amorphous carbon coating layer (shell) on the surface of the secondary particle. In one or more embodiments, the amorphous carbon may also be present between the silicon primary particles, for example, the silicon primary particles may be coated with amorphous carbon. The secondary particles may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and/or calcined coke.

If (e.g., when) the silicon-carbon composite includes silicon and amorphous carbon, a silicon content (e.g., amount) may be about 10 wt% to about 50 wt% and an amount of the amorphous carbon may be about 50 wt% to about 90 wt%, based on a total weight of 100 wt% of the silicon-carbon composite. In addition, if (e.g., when) the composite includes silicon, amorphous carbon, and crystalline carbon, a silicon content (e.g., amount) may be about 10 wt% to about 50 wt%, an amount of the crystalline carbon may be about 10 wt% to about 70 wt%, and an amount of the amorphous carbon may be about 20 wt% to about 40 wt%, based on a total weight of 100 wt% of the silicon-carbon composite.

In one or more embodiments, a thickness of the amorphous carbon coating layer may be about 5 nanometers (nm) to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). In this regard, the atomic content (e.g., amount) ratio of Si:O, which indicates a degree of oxidation, may be about 99:1 to about 33:67. As used herein, if (e.g., when) a definition is not otherwise provided, an average particle diameter (D₅₀) indicates a particle where a cumulative volume is about 50 volume% in a particle size distribution.

In one or more embodiments, the Si-based negative electrode active material or Sn-based negative electrode active material may be mixed with the carbon-based negative electrode active material. If (e.g., when) the Si-based negative electrode active material or Sn-based negative electrode active material and the carbon-based negative electrode active material are mixed and used, a mixing ratio may be a weight ratio of about 1:99 to about 90:10.

### Binder

The binder serves to suitably and/or well attach the negative electrode active material particles to each other and also to suitably and/or well attach the negative electrode active material to the negative electrode current collector. The binder may include a non-aqueous (e.g., water-insoluble) binder, an aqueous (water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from among a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

If (e.g., when) an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material capable of being fibrous, and may be, for example, polytetrafluoroethylene, polyvinylidene fluoride, a polyvinylidene fluoride-hexafluoropropylene copolymer, polyethylene oxide, or a combination thereof.

### Conductive Material

The conductive material (e.g., electron conductor) may be included to provide electrode conductivity and any electrically conductive material may be used as a conductive material unless it causes an undesirable chemical change. Non-limiting examples of the conductive material include a carbon-based material such as natural graphite, artificial graphite, carbon black, acetylene black, Ketjen black, a carbon fiber, a carbon nanofiber, a carbon nanotube, and/or the like; a metal-based material of a metal powder or a metal fiber including copper, nickel, aluminum silver, and/or the like; a conductive polymer such as a polyphenylene derivative; or a mixture thereof.

An amount of the negative electrode active material may be about 95 wt% to about 99.5 wt% based on a total weight of 100 wt% of the negative electrode active material layer, and an amount of the binder may be about 0.5 wt% to about 5 wt% based on the total weight of 100 wt% of the negative electrode active material layer. For example, in one or more embodiments, the negative electrode active material layer may include about 90 wt% to about 99 wt% of the negative electrode active material, about 0.5 wt% to about 5 wt% of the binder, and about 0.5 wt% to about 5 wt% of the conductive material, based on the total weight of 100 wt% of the negative electrode active material layer.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, a sheet, or a foam. A thickness of the negative electrode current collector may be, for example, about 1 µm to about 20 µm, about 5 µm to about 15 µm, or about 7 µm to about 10 µm.

### Electrolyte

In one or more embodiments, the electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of the rechargeable lithium battery. The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, 1,1-dimethylethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, or an ether group), and/or the like; amides such as dimethylformamide; dioxolanes such as 1,3-dioxolane, 1,4-dioxolane, and/or the like; sulfolanes; and/or the like.

The non-aqueous organic solvent may be used alone or in a mixture of two or more types (kinds) thereof, and if (e.g., when) two or more types (kinds) are used in a mixture, a mixing ratio may be appropriately or suitably adjusted according to the desired or suitable battery performance, which is widely suitable to those working in the field.

If (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

In one or more embodiments, the non-aqueous organic solvent may further include an aromatic hydrocarbon-based organic solvent. For example, in one or more embodiments, a carbonate-based solvent and an aromatic hydrocarbon-based organic solvent may be mixed and used in a volume ratio of about 1:1 to about 30:1.

In one or more embodiments, the electrolyte solution may further include vinylethylene carbonate, vinylene carbonate, or an ethylene carbonate-based compound to improve battery cycle-life.

Non-limiting examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the non-aqueous organic solvent supplies lithium ions in the rechargeable lithium battery, enables a basic operation of the rechargeable lithium battery, and improves transportation of the lithium ions between positive and negative electrodes. Non-limiting examples of the lithium salt may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are each an integer of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. If (e.g., when) the concentration of lithium salt is within the above range, the electrolyte solution has appropriate or suitable ionic conductivity and viscosity, and thus excellent or suitable performance may be achieved and lithium ions may move effectively.

### Separator

Depending on the type (kind) of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., simultaneously) surfaces (e.g., two opposite surfaces) of the porous substrate.

The porous substrate may be a polymer film formed of any one selected polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON^{®}), or a copolymer or a mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and/or a structural unit derived from (meth)acrylamidosulfonic acid or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but embodiments of the present disclosure are not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

A thickness of the coating layer may be about 0.5 µm to about 20 µm, for example, about 1 µm to about 10 µm, or about 1 µm to about 5 µm.

Examples and comparative examples of the present disclosure will be described in more detail herein. However, the following examples are mere examples of the present disclosure, and the present disclosure is not limited to the following examples.

### (Example)

### Example 1

### 1. Preparation of Positive Electrode Active Material

### (1) Preparation of Nickel-based Composite Oxide Containing Zirconium

First, a nickel-based composite oxide containing zirconium was prepared through the following co-precipitation method.

Nickel sulfate, cobalt sulfate, and manganese sulfate were dissolved in a molar ratio of Ni:Co:Mn=95:4:1 in distilled water of a solvent and then, mixed with Zr(SO₄)₂·4H₂O of a zirconium raw material, preparing a metal raw material mixture solution.

In addition, a diluted solution of ammonia water (NH₄OH) as a complexing agent and sodium hydroxide (NaOH) as a pH controlling agent were prepared. A concentration of the ammonia water was 10 wt%, and a concentration of the sodium hydroxide was 20 wt%. The metal raw material mixture solution, the ammonia water, and the sodium hydroxide were added to a reactor.

The mixture was stirred for 10 hours with the pH inside the reactor at 11.75 (first step (e.g., act or task)) and then, stirred for 22 hours with the pH lowered to 11.55 (second step (e.g., act or task)) to create a synthesis speed (e.g., rate) difference between inside and outside the particles and thereby, synthesize the nickel-based composite hydroxide containing zirconium.

Subsequently, the zirconium-containing nickel-based composite hydroxide was primarily heat-treated at 400 °C under an oxygen atmosphere for 6 hours, preparing a zirconium-containing nickel-based composite oxide (hereinafter, referred to as a 'Zr predoped oxide precursor').

### (2) Preparation of Positive Electrode Active Material

The zirconium-containing nickel-based composite oxide was mixed with anhydrous lithium hydroxide and then, secondarily, heat-treated at 660 °C for 12 hours under an oxygen atmosphere. After the firing, the zirconium-containing lithium nickel-based composite oxide was confirmed to have a composition of Li_{1.00}Ni_{0.93}Co_{0.06}Mn_{0.01}Zr_{0.002}O₂ and a form of secondary particles.

Subsequently, the zirconium-containing lithium nickel-based composite oxide in the form of secondary particles was pulverized with a jet mill equipment (processing 5 kg per minute) by setting a bed weight at 300 kg, a rotation speed of a sieving wheel at 1740 rpm, a rotation speed of a blower at 3000 rpm, a pulse pressure at 0.5 bar, and a gap pressure at 0.4 bar, and G/A at 6.3, obtaining a positive electrode active material in a form of single particles (Li_{1.00}Ni_{0.903}Co_{0.06}Mn_{0.01}Zr_{0.002}O₂).

The obtained positive electrode active material in a form of single particles had an average particle diameter (D₅₀) of 2.5 µm, a D₁₀ particle diameter of 1.47 µm, a D₉₀ particle diameter of 4.87 µm, a D₂₅ particle diameter of 1.91 µm, and a D₇₅ particle diameter of 3.73 µm.

In addition, when measured by using ICP-OES (inductively coupled plasma optical spectroscopy), 0.18 wt% of Zr was included based on the total weight of 100 wt% of the positive electrode active material in the form of single particles.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed to prepare a positive electrode active material layer slurry, and the slurry was coated on an aluminum foil current collector and then, dried and compressed to manufacture a positive electrode. The manufactured positive electrode included the positive electrode active material in the form of pulverized single particles.

A negative electrode active material layer slurry was prepared by mixing 97.5 wt% of graphite negative electrode active material, 1.5 wt% of carboxymethyl cellulose, and 1 wt% of styrene butadiene rubber in a water solvent. The negative electrode active material layer slurry was coated on a copper foil current collector, dried, and pressed, manufacturing a negative electrode.

The positive electrode and the negative electrode were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Comparative Example 1

The zirconium-containing nickel-based composite hydroxide was prepared according to the positive electrode active material-preparing process of Example 1, and the zirconium-containing nickel-based composite hydroxide (hereinafter, referred to as a 'Zr predoped hydroxide precursor') was mixed with anhydrous lithium hydroxide. Subsequently, the mixture was heat-treated in substantially the same manner as the second heat treatment in Example 1. In addition, the process after the second heat treatment was performed in substantially the same manner as in Example 1, manufacturing a positive electrode active material and a rechargeable lithium battery cell according to Comparative Example 1.

### Comparative Example 2

### 1. Preparation of Positive Electrode Active Material

A nickel-based composite hydroxide was synthesized in substantially the same co-precipitation method as in Example 1 except that nickel sulfate, cobalt sulfate, and manganese sulfate in a molar ratio of Ni:Co:Mn = 95:4:1 were dissolved in distilled water as a solvent to prepare a metal raw material mixture solution (which was not mixed with ZrO₂, a zirconium raw material).

Subsequently, the nickel-based composite hydroxide was heat-treated at 400 °C for 6 hours under an oxygen atmosphere to prepare a nickel-based composite oxide.

The prepared nickel-based composite oxide (hereinafter, referred to as a 'Zr undoped oxide precursor') was mixed with anhydrous lithium hydroxide and ZrO₂ and then, heat-treated in substantially the same manner as the second heat treatment of Example 1, preparing a Zr post-doped oxide precursor.

In addition, the process after the second heat treatment was also performed in substantially the same manner as in Example 1, manufacturing a positive electrode active material and a rechargeable lithium battery cell according to Comparative Example 2.

### (Evaluation Examples)

### Evaluation Example 1: Evaluation of Properties of Zr doped Precursor

The Zr predoped oxide precursor according to Example 1, the Zr predoped hydroxide precursor according to Comparative Example 1, and the Zr undoped oxide precursor according to Comparative Example 2 were each measured with respect to span value, tap density (g/cm³), BET (m²/g), and Zr content (e.g., Zr amount) (ppm), and the results are shown in Table 1.

For example, each of the precursors was measured with respect to particle sizes of D₁₀, D₅₀, and D₉₀, which corresponded to 10%, 50%, and 90% cumulative values in its particle size distribution, which were used to derive a span value by calculating a formula of {(D₉₀-D₁₀)/D₅₀}.

In addition, each of the precursor powders was tapped according to the ASTM B527 standard and then measured with respect to a powder volume after the tapping, and then, the tap density (g/cm³) was measured by dividing powder mass by the powder volume.

Furthermore, each of the precursors was measured with respect to BET specific surface area by using a BET analyzer.

In addition, the Zr predoped oxide precursor of Example 1 and Zr the predoped hydroxide precursor of Comparative Example 1 were each measured with respect to the Zr content (e.g., amount) by using ICP-OES (inductively coupled plasma optical spectroscopy).

**Table 1**

| | Span value | Tap density (TD, g/cm³) | BET (m²/g) | Zr content (ppm) |
|---|---|---|---|---|
| Zr predoped oxide precursor of Example 1 | 0.43 | 2.08 | 75.90 | 2471 |
| Zr predoped hydroxide precursor of Comparative Example 1 | 1.00 | 2.01 | 7.76 | 1274 |
| Zr undoped oxide precursor of Comparative Example 2 | 0.64 | 1.79 | 11.76 | 0 |

Referring to Table 1, the Zr predoped oxide precursor of Example 1 exhibited a lower span value than those of Comparative Examples 1 and 2, which confirmed that the Zr predoped oxide precursor of Example 1 had more uniform particle size distribution.

In addition, the Zr predoped oxide precursor of Example 1 exhibited higher tap density and thus a smaller volume after the tapping at the same mass than those of Comparative Examples 1 and 2, which confirmed that the Zr predoped oxide precursor of Example 1 exhibited a higher reaction yield than those of the comparative examples.

In addition, the Zr predoped oxide precursor of Example 1 exhibited a superbly higher BET specific surface area than those of Comparative Examples 1 and 2, which confirmed that the substantially uniform precursor particles (or powder) brought about the high specific surface area.

### Evaluation Example 2: Evaluation of SPAN and BET values (confirmation of uniformity)

The positive electrode active materials according to Example 1 and Comparative Examples 1 and 2 were each measured with respect to span value. For example, each of the positive electrode active materials was measured with respect to D₁₀, D₅₀, and D₉₀ corresponding to 10%, 50%, and 90% cumulative values of its particle size distribution to calculate {(D₉₀-D₁₀)/D₅₀}, which was obtained as a span value, and the results are shown in Table 2.

In addition, the positive electrode active materials of Example 1 and Comparative Examples 1 and 2 were each measured with respect to BET specific surface area by using a BET analyzer, and the results are shown in Table 2.

### Evaluation Example 3: SEM Image Evaluation (Confirmation of Uniformity)

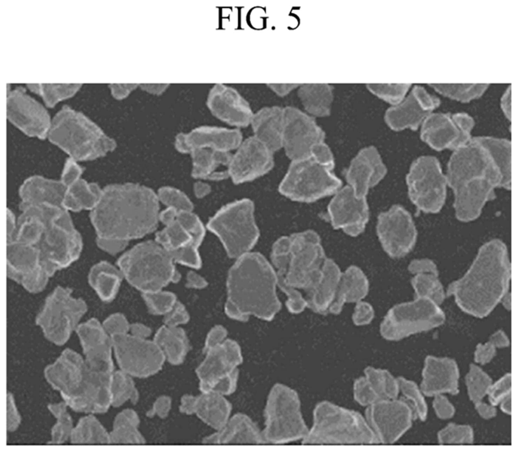

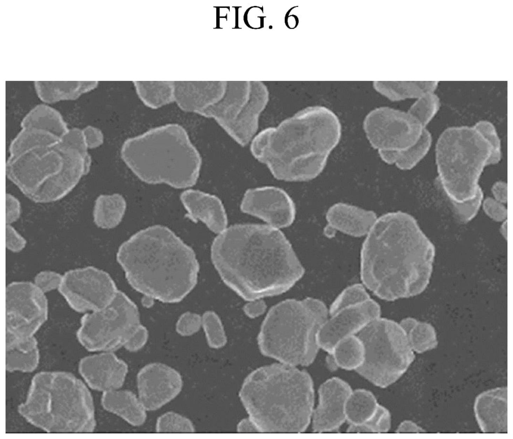

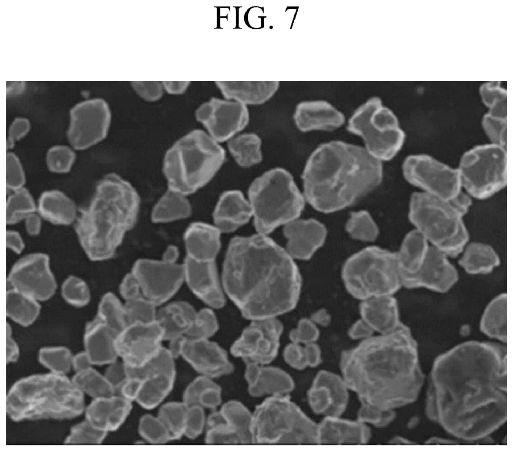

The positive electrode active materials of Example 1 and Comparative Examples 1 and 2 were taken SEM images of and then, respectively shown in FIGS. 5, 6, and 7.

Referring to FIGS. 5, 6, and 7, Example 1 was confirmed that the zirconium predoping synthesis promoted growth of positive electrode active material single particles, resulting in substantially uniform particle growth. In contrast, Comparative Examples 1 and 2 were confirmed to exhibit inferior particle uniformity to Example 1.

### Evaluation Example 4: Evaluation of Initial Charge/Discharge Efficiency and Cycle-life Characteristics

The rechargeable lithium battery cells of Example 1 and Comparative Examples 1 and 2 were each evaluated with respect to initial charge/discharge efficiency.

For example, each of the rechargeable lithium battery cells was charged to 4.3 V at a constant current of 0.2 C and to 0.05 C at the constant voltage and then, discharged to 3.0 V at 0.2 C at 25 °C for initial charge/discharge. Herein, the cells were each measured with respect to charge capacity (mAh), discharge capacity (mAh), and charge/discharge efficiency (%), which are shown in Table 2.

Subsequently, the cells were each 50 times repeatedly charged and discharged at 1.0 C within a voltage range of 3.0 V to 4.3 V at 45 °C. Herein, the cells were each measured with respect to a capacity retention rate as cycle-life (%), which is shown in Table 2.

**Table 2**

| | | 0.2 C/0.2 C charge/discharge (1st cycle) | | | 1 C/1 C (50^{th}cycle) | Span value | BET (m²/g) |
|---|---|---|---|---|---|---|---|
| | | Charge capacity | Discharge capacity | Efficiency (%) | Cycle-life (%) | | |
| Zr predoped oxide precursor | Example 1 | 248.3 | 222.5 | 89.6 | 95.5 | 1.20 | 0.99 |
| | | 248.5 | 222.4 | 89.5 | 95.6 | | 0.99 |
| | | 248.2 | 222.7 | 89.7 | 95.5 | | |
| Zr predoped hydroxide precursor | Comparative Example 1 | 251.9 | 220.8 | 87.7 | 91.0 | 1.42 | 0.50 |
| | | 251.8 | 220.4 | 87.5 | 91.2 | | 0.50 |
| | | 251.7 | 220.5 | 87.6 | 90.3 | | |
| Zr post-doped oxide precursor | Comparative Example 2 | 247.0 | 213.1 | 86.3 | 94.1 | 1.35 | 0.73 |
| | | 246.4 | 212.7 | 86.3 | 94.2 | | 0.73 |
| | | 246.6 | 212.3 | 86.1 | 94.7 | | |

Referring to Table 2, the positive electrode active material of Example 1 exhibited a lower span value but a higher BET specific surface area than those of Comparative Examples 1 and 2, which confirmed substantially uniform particle growth.

In addition, the rechargeable lithium battery cell of Example 1, compared with the cells of Comparative Examples 1 and 2, exhibited superbly excellent or suitable charge/discharge efficiency and cycle-life characteristics.

For example, the evaluation results collectively demonstrate that the positive electrode active material prepared according to embodiments of the present disclosure, which employs zirconium pre-doping during the co-precipitation stage and subsequent controlled pulverization, exhibits a substantially uniform particle size distribution, higher tap density, and increased specific surface area compared to materials prepared by comparable post-doping or undoped methods. These structural and morphological advantages translate into improved electrochemical performance, as evidenced by enhanced initial charge/discharge efficiency and superior cycle-life characteristics in rechargeable lithium batteries incorporating the inventive positive electrode active material. Accordingly, the disclosed method and resulting material provide a high-energy-density lithium batteries with improved durability and reliability.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, ± 20%, ± 10%, or ± 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An electrode active material manufacturing system, a battery manufacturing system, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

While this disclosure has been described in connection with what is presently considered to be practical example embodiments, it is to be understood that the disclosure is not limited to the disclosed embodiments, but, in contrast, is intended to cover one or more suitable modifications and equivalent arrangements included within the spirit and scope of the appended claims and equivalents thereof.

### <Reference Numerals >

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising
a lithium nickel-based composite oxide having a nickel content of greater than or equal to 60 mol% based on 100 mol% of a total metal excluding lithium in the lithium nickel-based composite oxide, and the lithium nickel-based composite oxide further comprising zirconium,
wherein the positive electrode active material has a span ((D₉₀-D₁₀)/D₅₀) value of 1.10 to 1.25 in the particle size distribution and is in the form of single particles.

2. The positive electrode active material as claimed in claim 1, wherein
the average particle diameter (D₅₀) of the positive electrode active material is 1 µm to 4 µm.

3. The positive electrode active material as claimed in claim 1 or 2, wherein
the zirconium is present in an amount of 0.1 wt% to 0.4 wt% based on a total weight of 100 wt% of the lithium nickel-based composite oxide.

4. The positive electrode active material as claimed in any one of claims 1 to 3, wherein
the lithium nickel-based composite oxide is represented by Chemical Formula 1:
Chemical Formula 1 Liₐ₁Niₓ₁M¹_{y1}Zr_{z1}O_{2-b1}X_{b1},
in Chemical Formula 1, 0.9≤a1≤1.2,
0.6≤x1≤0.991, 0≤y1≤0.5, 0.001≤z1≤0.003, 0.9≤x1+y1≤1.1, and 0≤b1≤0.1,
M¹ being one or more elements selected from among Al, B, Ba, Ca, Ce, Co, Cr, Cu, Fe, Mg, Mn, Mo, Nb, Si, Sn, Sr, Ti, V, W, and Zn, and
X being one or more elements selected from among F, P, and S.

5. A positive electrode, comprising
a positive electrode current collector, and
a positive electrode active material layer on the positive electrode current collector and comprising the positive electrode active material as claimed in any one of claims 1 to 4.

6. A method, comprising
mixing a zirconium raw material and a nickel raw material and performing a co-precipitation reaction to prepare a nickel-based composite hydroxide containing zirconium;
subjecting the nickel-based composite hydroxide containing zirconium to a first heat treatment to prepare a nickel-based composite oxide containing zirconium;
mixing the nickel-based composite oxide containing zirconium and a lithium raw material and performing a second heat treatment to prepare a lithium nickel-based composite oxide containing zirconium in a form of secondary particles in which a plurality of primary particles are agglomerated; and
pulverizing the lithium nickel-based composite oxide in the form of secondary particles to obtain a positive electrode active material in a form of single particles,
wherein the method is a method for preparing a positive electrode active material.

7. The method as claimed in claim 6, wherein
the zirconium raw material comprises zirconium oxide, zirconium hydroxide, zirconium oxyhydroxide, zirconium sulfate, zirconium sulfide, zirconium acetate, zirconium nitrate, zirconium halide, or a combination thereof; and/or
wherein
in the co-precipitation reaction, in addition to the zirconium raw material and the nickel raw material, a metal (M¹) raw material is mixed together, and
wherein M¹ is one or more elements selected from among Al, B, Ba, Ca, Ce, Co, Cr, Cu, Fe, Mg, Mn, Mo, Nb, Si, Sn, Sr, Ti, V, W, and Zn.

8. The method as claimed in any one of claims 6 or 7, wherein
the first heat treatment is performed at a temperature of 250 °C to 500 °C, in an oxygen atmosphere or an air atmosphere for 1 hour to 10 hours; and/or wherein
the second heat treatment is performed at a temperature of 600 °C to 900 °C for 4 hours to 16 hours.

9. The method as claimed in any one of claims 6 to 8, wherein
the nickel-based composite oxide containing zirconium is represented by Chemical Formula 11:
Chemical Formula 11 Niₓ₁₁M¹_{y11}Zr_{z11}O₂,
in Chemical Formula 11,
0.6≤x11≤1, 0≤y11<0.4, 0<Z11≤0.003,
0.9≤x11+y11+z11≤1.1, and
M¹ being one or more elements selected from among Al, B, Ba, Ca, Ce, Co, Cr, Cu, Fe, Mg, Mn, Mo, Nb, Si, Sn, Sr, Ti, V, W, and Zn.

10. The method as claimed in any one of claims 6 to 9, wherein
the zirconium is present in an amount of 0.1 wt% to 0.5 wt% based on a total weight of 100 wt% of the nickel-based composite oxide containing zirconium.

11. The method as claimed in any one of claims 6 to 10, wherein
an alkaline particle growth accelerator is not added during the second heat treatment process of the nickel-based composite oxide containing zirconium and lithium raw material.

12. The method as claimed in any one of claims 6 to 11, wherein
the average particle diameter (D₅₀) of the secondary particles is 10 µm to 20 µm, and
the average particle diameter (D₅₀) of the primary particles forming the secondary particles is 1 µm to 4 µm.

13. The method as claimed in any one of claims 6 to 12, wherein
the pulverizing is performed utilizing a jet mill equipment, and
the rotation speed of a sieving wheel of the jet mill equipment is 1500 rpm to 2000 rpm, a rotation speed of a blower of the jet mill equipment is 2500 rpm to 3500 rpm, and a pulse pressure is 0.25 bar to 0.75 bar.

14. The method as claimed in any one of claims 6 to 13, wherein
the average particle diameter (D₅₀) of the positive electrode active material in the form of single particles is 1 µm to 4 µm, and
the zirconium is present in an amount of 0.1 wt% to 0.4 wt% based on a total weight of 100 wt% of the positive electrode active material in the form of single particles.

15. A rechargeable lithium battery, comprising
the positive electrode as claimed in claim 5,
a negative electrode, and
an electrolyte.
